# EUROPEAN PATENT APPLICATION

(11) **EP 4 596 281 A1**
(43) Date of publication of application: **06.08.2025**
(21) Application number: 23870460.5
(22) Date of filing: 19.09.2023
(51) Int. Cl.: B60K 1/04, B60L 58/26, B60L 58/24, H01M 10/613, H01M 10/625, B60R 13/06

(54) **VEHICLE**

(30) Priority: 30.09.2022 CN 202222639465 U
(71) Applicant: BYD Company Limited, Shenzhen, Guangdong 518118 (CN)
(72) Inventor: ZHU, Ruiyuan, Shenzhen, Guangdong 518118 (CN); CAI, Yaomin, Shenzhen, Guangdong 518118 (CN); GU, Zhengrong, Shenzhen, Guangdong 518118 (CN); ZHONG, Rijun, Shenzhen, Guangdong 518118 (CN); CHEN, Lu, Shenzhen, Guangdong 518118 (CN)
(74) Representative: Mathys & Squire
(86) International application number: PCT/CN2023/119563
(87) International publication number: WO 2024/067228

(57) **Abstract**

A vehicle (100). The vehicle (100) comprises a vehicle body (30), a battery (10), and a sealing assembly (20). The sealing assembly (20) is arranged between the vehicle body (30) and the battery (10). The sealing assembly (20) comprises a sealing plate (201) and a sealing member (202). The sealing plate (201) is fixed and hermetically connected to the battery (10), and the surface of the sealing plate (201) distant from the battery (10) has a mounting plane (203). The sealing member (202) is arranged on the mounting plane (203), and the sealing member (202) is sandwiched between the vehicle body (30) and the sealing plate (201), wherein the vehicle body (30) and the battery (10) jointly define a passenger compartment (40), or the vehicle body (30) and the sealing assembly (20) jointly define a passenger compartment (40), so that unreliable sealing between the vehicle body (30) and the battery (10) is prevented, thereby reducing the water seepage problem of the vehicle (100) and improving the product quality of the vehicle (100).

## Description

### CROSS-REFERENCE TO RELATED APPLICATIONS

The present disclosure is proposed based on Chinese Patent Application No. 202222639465.4 filed on September 30, 2022, and claims priority to the Chinese patent application. The entire content of the above-referenced application is incorporated herein by reference.

### FIELD

The present disclosure relates to the field of vehicles, and more specifically, to a vehicle.

### BACKGROUND

In the related art, in existing vehicles, at least part of a structure of a battery may be used as a floor of the vehicle. When the vehicle body and the battery are connected, a gap between the vehicle body and the battery needs to be sealed to prevent liquid from seeping into the passenger compartment of the vehicle through the gap between the vehicle body and the battery when the vehicle is wading through water. However, in the related art, sealing between the vehicle body and the battery is unreliable, and the vehicle has a risk of water seepage.

### SUMMARY

The present disclosure is intended to resolve one of technical problems in the related art at least to some extent.

An object of the present disclosure is to provide a vehicle. The vehicle may prevent unreliable sealing between a vehicle body and a battery, so as to alleviate a water seepage problem of the vehicle and improve product quality of the vehicle.

The vehicle according to the present disclosure includes a vehicle body, a battery, and a sealing assembly. The sealing assembly is arranged between the vehicle body and the battery. The sealing assembly includes a sealing plate and a sealing member. The sealing plate is fixed and hermetically connected to the battery. A surface of the sealing plate that is away from the battery has a mounting plane. The sealing member is arranged on the mounting plane. The sealing member is sandwiched between the vehicle body and the sealing plate. the vehicle body and the battery jointly define a passenger compartment, or the vehicle body and the sealing assembly jointly define the passenger compartment.

According to the vehicle of the present disclosure, the sealing plate having the mounting plane is arranged between the sealing member and the battery, and the sealing member is mounted to the mounting plane, so that after the sealing plate is fixed and hermetically connected to the battery, a slit may be prevented from being generated between the sealing member and the battery. Compared with the related art, the unreliable sealing between the vehicle body and the battery may be prevented, thereby alleviating the water seepage problem of the vehicle and improving the product quality of the vehicle.

Additional aspects and advantages of the present disclosure are to be partially given in the following description, and partially become apparent in the following description or learned through the practice of the present disclosure.

### BRIEF DESCRIPTION OF THE DRAWINGS

FIG. 1 is a schematic diagram of a sealing assembly and a heat exchange plate according to an embodiment of the present disclosure after being connected and fitted;
FIG. 2 is an exploded view of a vehicle according to an embodiment of the present disclosure with a vehicle body being removed;
FIG. 3 is a top view of a vehicle according to an embodiment of the present disclosure with a vehicle body being removed;
FIG. 4 is a cross-sectional view of a sealing assembly and a heat exchange plate according to an embodiment of the present disclosure after being connected and fitted;
FIG. 5 is an enlarged schematic view of a part A in FIG. 4;
FIG. 6 is a schematic diagram of a vehicle according to an embodiment of the present disclosure;
FIG. 7 is a sectional view of a vehicle according to an embodiment of the present disclosure;
FIG. 8 is an exploded view of a vehicle according to an embodiment of the present disclosure; and
FIG. 9 is a schematic diagram of a heat exchange plate according to an embodiment of the present disclosure.

### DETAILED DESCRIPTION

Embodiments of the present disclosure are described in detail below. Examples of the embodiments are shown in accompany drawings. Same or similar elements or elements having same or similar functions are denoted by same or similar reference numerals throughout the description. The embodiments described below with reference to the accompanying drawings are exemplary and used only for explaining the present disclosure, and should not be construed as a limitation on the present disclosure.

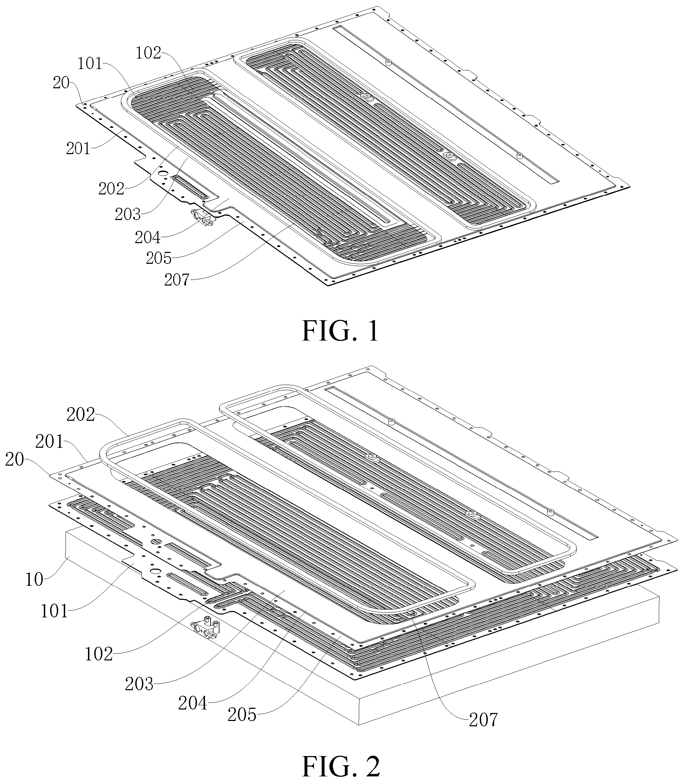

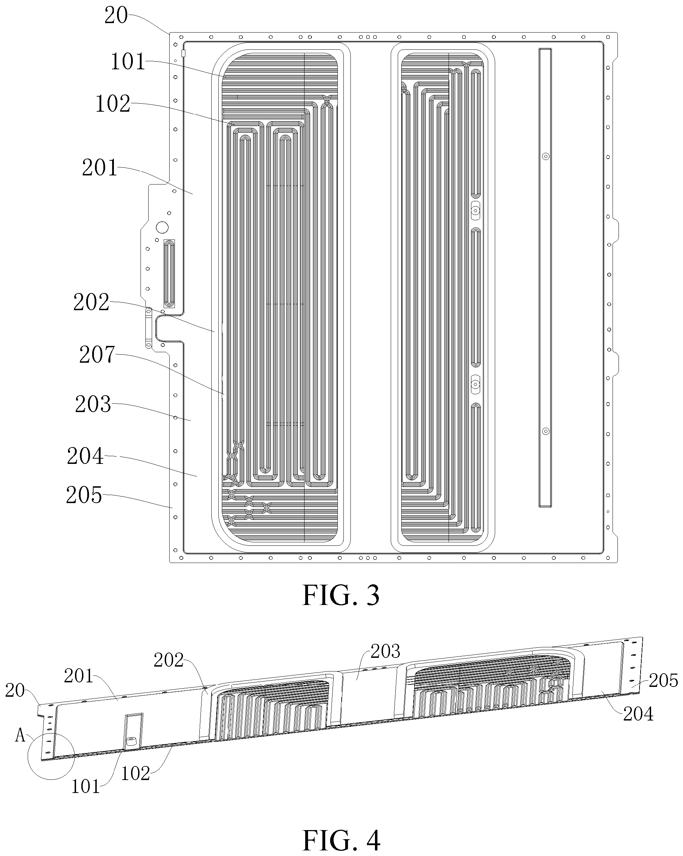

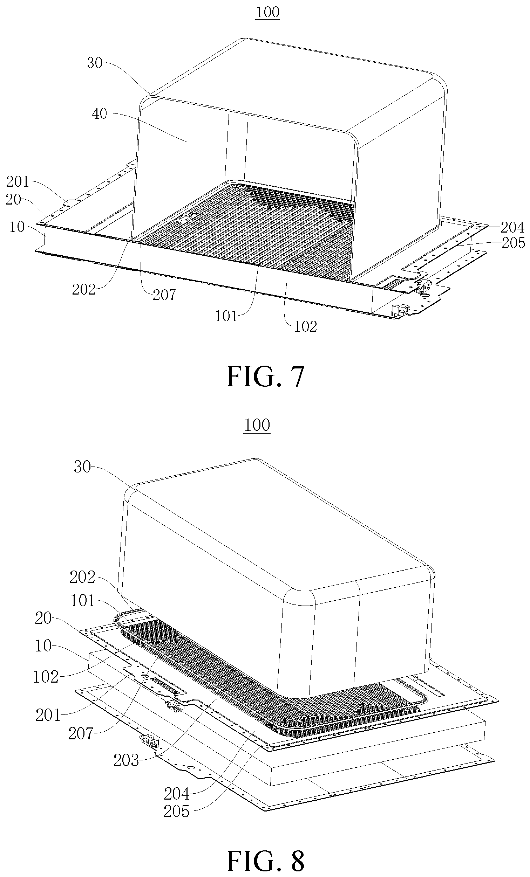

A vehicle 100 according to an embodiment of the present disclosure is described below with reference to FIG. 1 to FIG. 9. The vehicle 100 may be an electric vehicle 100. The electric vehicle 100 supplies power to a motor of the vehicle 100 through a battery 10 to drive the vehicle 100 to travel.

As shown in FIG. 1 to FIG. 9, the vehicle 100 according to the embodiment of the present disclosure includes a vehicle body 30, a battery 10, and a sealing assembly 20. The battery 10 may supply power to the motor of the vehicle 100. In a height direction of the vehicle 100, the vehicle body 30 is arranged above the battery 10, and the sealing assembly 20 is arranged between the vehicle body 30 and the battery 10. The sealing assembly 20 is configured to seal a gap between the vehicle body 30 and the battery 10. In some specific implementations, the vehicle body 30 and the battery 10 jointly define a passenger compartment 40. An enclosed environment may be formed in the passenger compartment 40. The passenger compartment 40 may accommodate a passenger. Part of a structure of the battery 10 corresponding to the passenger compartment 40 is constructed as a floor of the vehicle 100. To be specific, at least part of the structure of the battery 10 may be used as the floor of the vehicle 100. The battery 10 may be configured to support the vehicle body 30 and the passenger.

Certainly, in some other specific implementations, the vehicle body 30 and the sealing assembly 20 jointly define the passenger compartment 40. Part of a structure of the sealing assembly 20 corresponding to the passenger compartment 40 is constructed as a floor of the vehicle 100. To be specific, at least part of the structure of the sealing assembly 20 may be used as the floor of the vehicle 100. The sealing assembly 20 may be configured to support the vehicle body 30 and the passenger. In addition, the sealing assembly 20 includes a sealing plate 201 and a sealing member 202. The sealing plate 201 is fixed and hermetically connected to the battery 10. Specifically, the battery 10 includes a heat exchange plate 101. The heat exchange plate 101 is fixed and hermetically connected to the sealing plate 201. In some embodiments, a connection structure is filled between the sealing plate 201 and the heat exchange plate 101. The connection structure fixes and hermetically connects the sealing plate 201 and the heat exchange plate 101. The connection structure filled between the sealing plate 201 and the heat exchange plate 101 may be formed by solder or glue. In other words, the sealing plate 201 and the heat exchange plate 101 may be connected by welding, bonding, and the like. To be specific, the sealing plate 201 is immovable relative to the battery 10, and the sealing plate 201 and the heat exchange plate 101 are fixedly connected by welding, bonding, and the like. The connection structure formed by connecting materials such as a solder and an adhesive between the sealing plate 201 and the heat exchange plate 101 may seal the gap between the sealing plate 201 and the heat exchange plate 101, so that a liquid cannot seep into the passenger compartment 40 through the gap between the sealing plate 201 and the heat exchange plate 101, and the passenger compartment 40 may have desirable sealing effectiveness.

Moreover, a surface of the sealing plate 201 that is away from the battery 10 has a mounting plane 203. The sealing member 202 is arranged on the mounting plane 203. For example, the sealing member 202 may be bonded to the mounting plane 203. It should be noted that the mounting plane 203 is constructed as a flat plane. A height of the mounting plane 203 has no obvious fluctuation. By arranging the sealing member 202 on the mounting plane 203, the sealing member 202 may be completely fitted with the mounting plane 203, the sealing member 202 may seal the gap between the sealing member 202 and the mounting plane 203, so that the liquid cannot seep into the passenger compartment 40 through the gap between the sealing member 202 and the mounting plane 203, and the passenger compartment 40 may have desirable sealing effectiveness.

In addition, the sealing member 202 is sandwiched between the vehicle body 30 and the sealing plate 201. In other words, the sealing member 202 is in contact with both the vehicle body 30 and the sealing plate 201. Since the mounting plane 203 has no obvious protrusions and depressions, in a case that the sealing member 202 has a constant thickness throughout the sealing member, after the sealing member 202 is attached to the mounting plane 203, a surface of the sealing member 202 in contact with the vehicle body 30 has a constant height throughout the surface. When the sealing member 202 abuts against and is fitted with the vehicle body 30, the sealing member 202 may be completely attached to the vehicle body 30, and the sealing member 202 may seal the gap between the sealing member 202 and the vehicle body 30, so that the liquid cannot seep into the passenger compartment 40 through the gap between the sealing member 202 and the vehicle body 30, and the passenger compartment 40 may have desirable sealing effectiveness.

In this way, by arranging the sealing plate 201 having the mounting plane 203 between the sealing member 202 and the battery 10, the sealing assembly 20 may achieve desirable sealing between the sealing plate 201 and the battery 10, between the sealing member 202 and the sealing plate 201, and between the sealing member 202 and the vehicle body 30, so as to improve the sealing effectiveness of the passenger compartment 40. Compared with the related art, a slit is not easily generated between the vehicle body 30 and the battery 10. The sealing assembly 20 may prevent the liquid from seeping into the passenger compartment 40 through the gap between the vehicle body 30 and the battery 10, thereby alleviating a water seepage problem of the vehicle 100 and further improving product quality of the vehicle 100.

In some embodiments of the present disclosure, as shown in FIG. 1 to FIG. 5 and FIG. 7 to FIG. 9, the heat exchange plate 101 is configured to exchange heat with a battery core of the battery 10. Specifically, the heat exchange plate 101 may heat or cool the battery core, so that the battery core may operate at a desirable operating temperature. The heat exchange plate 101 and the vehicle body 30 jointly define the passenger compartment. In other words, the heat exchange plate 101 may be used as the floor of the vehicle 100.

The heat exchange plate 101 defines a heat exchange flow channel 102, and a refrigerant may flow in the heat exchange flow channel 102. Further, the heat exchange plate 101 has multiple heat exchange flow channels 102. The multiple heat exchange flow channels 102 are successively arranged on a surface of the heat exchange plate 101. The surface of the heat exchange plate 101 close to the battery core is constructed as a plane. Heat is conducted between the battery core and the heat exchange plate 101 through a thermally conductive adhesive. By constructing the surface of the heat exchange plate 101 close to the battery core as a plane, a thickness of the thermally conductive adhesive between the battery core and the heat exchange plate 101 is uniform, so that the heat exchange between the battery core and the heat exchange plate 101 may be uniform. Therefore, the multiple heat exchange flow channels 102 defined by the heat exchange plate 101 all protrude toward the vehicle body 30. The sealing plate 201 is arranged between the sealing member 202 and the heat exchange plate 101. The sealing plate 201 has a first sealing portion 204. The first sealing portion 204 is fixed and hermetically connected to the heat exchange plate 101. The first sealing portion 204 corresponds to each of the heat exchange flow channels 102.

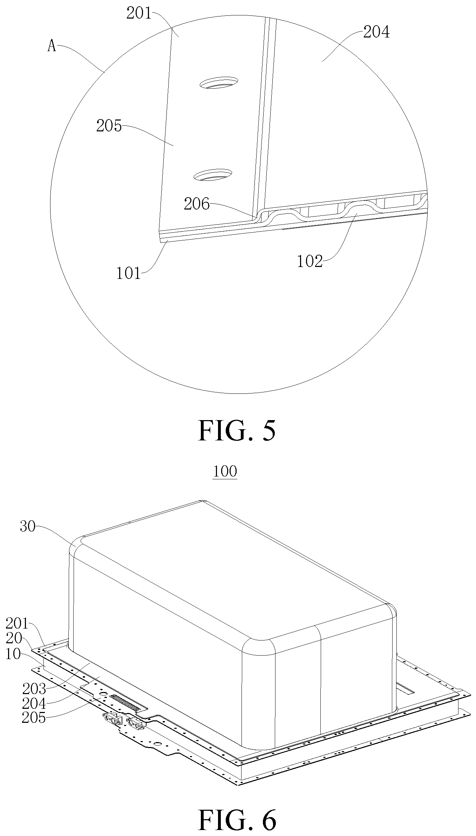

Specifically, the first sealing portion 204 may be arranged opposite to the heat exchange flow channel 102 and then connected to the heat exchange flow channel by welding, bonding, or the like. In some embodiments, a surface of the first sealing portion 204 connected to an outer side wall of the heat exchange flow channel 102 may be adapted to an outer shape of the outer side wall of the heat exchange flow channel 102. To be specific, the surface of the first sealing portion 204 connected to the heat exchange plate 101 is constructed as a profiling surface. In this way, a connection area between the first sealing portion 204 and the heat exchange plate 101 may be increased, which is beneficial to improve connection strength between the first sealing portion 204 and the heat exchange plate 101, and may also improve sealing effectiveness between the first sealing portion 204 and the heat exchange plate 101. Certainly, in some other embodiments, as shown in FIG. 5, the surface of the first sealing portion 204 connected to the outer side wall of the heat exchange flow channel 102 may be constructed as a plane. To be specific, the surface of the first sealing portion 204 connected to the heat exchange plate 101 is constructed as a plane. In this way, the processing difficulty and assembly difficulty of the sealing plate 201 may be reduced, and production costs of the vehicle 100 may be reduced.

In some embodiments, the outer side wall of the heat exchange flow channel 102 connected to the first sealing portion 204 protrudes toward the sealing plate 201 to form a first connecting portion. The first sealing portion 204 may be fixed and hermetically connected to the first connecting portion of the heat exchange plate 101. For example, the first sealing portion 204 may be connected to the first connecting portion by welding or bonding, so that the first sealing portion 204 may be reliably connected to the connecting portion of the heat exchange plate 101. In addition, the connection structure formed by the connecting material such as the solder or the adhesive may seal the gap between the first sealing portion 204 and the heat exchange plate 101, thereby preventing the liquid from seeping into the gap between the first sealing portion 204 and the heat exchange plate 101, and further preventing the liquid from further seeping into the passenger compartment 40, which is beneficial to keep the passenger compartment 40 dry and improve the product quality of the vehicle 100. Further, a surface where the first connecting portion is connected to the first sealing portion 204 is constructed as a plane. In some specific implementations, a width of the first connecting portion may be not less than 1 mm. In this way, a connecting range between the first connecting portion and the first sealing portion 204 may be enlarged, so that the connection between the first sealing portion 204 and the heat exchange plate 101 may be more reliable, the first sealing portion 204 may be prevented from falling off the heat exchange plate 101, and a sealing effect between the first sealing portion 204 and the heat exchange plate 101 may be further improved.

In some embodiments of the present disclosure, as shown in FIG. 1 to FIG. 8, the first sealing portion 204 is formed with a mounting plane 203. Along a radial direction of the vehicle 100, the battery core is located on an inner side of the battery 10, the heat exchange flow channels 102 are densely arranged on an inner side of the heat exchange plate 101 to correspond to the battery core. Correspondingly, the first sealing portion 204 is arranged close to an inner side of the sealing plate 201 to be connected to the heat exchange flow channel 102, and a surface where the vehicle body 30 is connected and fitted with the sealing member 202 is located in a projection of the first sealing portion 204. Therefore, the first sealing portion 204 may be arranged opposite to the vehicle body 30, and the first sealing portion 204 completely forms the mounting plane 203, so that a protrusion and a depression are not easily generated on the mounting plane 203. In this way, the sealing member 202 may be completely attached to the mounting plane 203, and then the gap between the sealing member 202 and the mounting plane 203 may be prevented from affecting the sealing effectiveness of the passenger compartment 40.

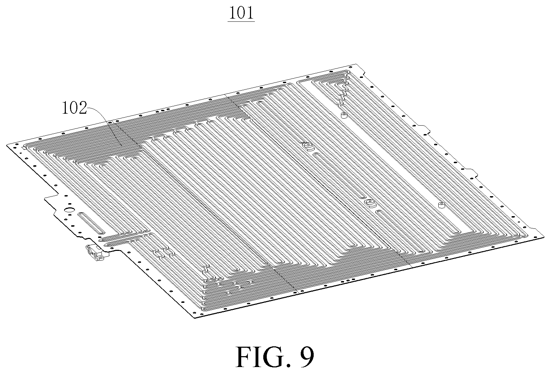

In some embodiments of the present disclosure, as shown in FIG. 1 to FIG. 8, the sealing plate 201 further has a second sealing portion 205. The heat exchange plate 101 has a second connecting portion. The second connecting portion is arranged at an edge of the heat exchange plate 101 and surrounds an outer side of the heat exchange flow channel 102. The second sealing portion 205 is fixed and hermetically connected to the heat exchange plate 101. The second sealing portion 205 is arranged corresponding to the second connecting portion. The heat exchange flow channel 102 is arranged close to the inner side of the heat exchange plate 101, and the edge of the heat exchange plate 101 is located on the outer side of the heat exchange flow channel 102. In other words, when the first sealing portion 204 corresponds to the heat exchange flow channel 102 and the second sealing portion 205 corresponds to the edge of the heat exchange plate 101, the second sealing portion 205 is located on an outer side of the first sealing portion 204. As shown in FIG. 9, a surface of the second connecting portion connected to the sealing plate 201 is constructed as a plane. The connection strength between the heat exchange plate 101 and the sealing plate 201 may be improved by attaching and fixing the second sealing portion 205 to the second connecting portion, to further prevent the heat exchange plate 101 from being separated from the sealing plate 201, and improve the sealing effectiveness between the heat exchange plate 101 and the sealing plate 201. In this way, the liquid cannot seep into the gap between the second sealing portion 205 and the heat exchange plate 101, and then the liquid cannot further seep into the gap between the first sealing portion 204 and the heat exchange plate 101, which is beneficial to further prevent the liquid from seeping into the passenger compartment 40 and further improve the product quality of the vehicle 100.

In some embodiments of the present disclosure, as shown in FIG. 5, a connecting flange 206 is connected between the first sealing portion 204 and the second sealing portion 205, so that a height of the first sealing portion 204 is greater than a height of the second sealing portion 205. The connecting flange 206 is arranged between the first sealing portion 204 and the second sealing portion 205. The connecting flange 206 may extend along the height direction of the vehicle 100. One end of the connecting flange 206 may be connected to the first sealing portion 204. Another end of the connecting flange 206 may be connected to the second sealing portion 205. By causing the height of the first sealing portion 204 to be inconsistent with the height of the second sealing portion 205, the first sealing portion 204 may be connected and fitted with the heat exchange flow channel 102 protruding from the heat exchange plate 101, and the second sealing portion 205 may be connected and fitted with the second connecting portion of the heat exchange plate 101 which is lower than the heat exchange flow channel 102. The first sealing portion 204 and the second sealing portion 205 can both be attached to the heat exchange plate 101, that is, the sealing plate 201 may be matched with the heat exchange plate 101, thereby ensuring a reliable connection between the sealing plate 201 and the heat exchange plate 101, and further preventing the liquid from seeping into the gap between the sealing plate 201 and the heat exchange plate 101.

In some embodiments of the present disclosure, as shown in FIG. 1 to FIG. 4, FIG. 7, and FIG. 8, the sealing plate 201 defines an avoidance hole 207 for avoiding the battery 10. The avoidance hole 207 corresponds to the passenger compartment 40. In a radial direction of the sealing plate 201, the avoidance hole 207 is located on an inner side of an outer peripheral wall of the vehicle body 30, that is, the avoidance hole 207 is located in the passenger compartment 40. The avoidance hole 207 may cause at least part of the structure of the heat exchange plate 101 of the battery 10 to be located in the passenger compartment 40, so that the heat exchange plate 101 may be used as the floor of the vehicle 100. In addition, by providing the avoidance hole 207 on the sealing plate 201, the avoidance hole 207 may reduce a weight of the sealing plate 201, thereby reducing the overall weight of the vehicle 100, and further causing the vehicle 100 to meet a requirement for a lightweight design.

In some embodiments of the present disclosure, as shown in FIG. 1 to FIG. 4, FIG. 7, and FIG. 8, the sealing member 202 may be constructed in a shape of a ring, that is, the sealing member 202 may be constructed as a sealing ring. By constructing the sealing member 202 as an annular structure, no gap may exist on a circumferential side wall of the sealing member 202. When the sealing member 202 is sandwiched between the vehicle body 30 and the sealing plate 201, the liquid cannot directly flow into the passenger compartment 40 through the sealing member 202. In addition, the sealing member 202 may be matched with a circumferential outer side wall of the vehicle body 30. In this way, the sealing member 202 may be completely attached to the surface of the vehicle body 30 close to the battery 10, thereby avoiding water seepage between the sealing member 202 and the vehicle body 30. In some embodiments, the sealing member 202 may be made of a rubber material. The rubber material has desirable sealing performance, so that the sealing member 202 may have desirable elasticity. In the height direction of the vehicle 100, when the vehicle 100 travels on a bumpy road and the vehicle body 30 sways, the sealing member 202 may be compressed or rebounded to ensure that the sealing member 202 and the vehicle body 30 are not separated, thereby improving the sealing effectiveness of the passenger compartment 40.

In some embodiments of the present disclosure, when the sealing member 202 is constructed as an annular sealing ring, a cross-sectional width of the sealing member 202 before compression deformation is L1, and a cross-sectional thickness of the sealing member 202 before compression deformation is L2, which satisfy the following relation: L1 ≥ 2L2. In other words, the cross-sectional width of the sealing member 202 before the compression deformation is at least twice the cross-sectional thickness. When a mounting tolerance exists on a circumferential outer edge of the vehicle body 30, this design may ensure that the sealing member 202 can be completely attached to the surface of the vehicle body 30 close to the battery 10, thereby reducing influence of the mounting tolerance of the vehicle body 30 on the sealing effectiveness of the passenger compartment 40, and further improving the product quality of the vehicle 100.

In some embodiments of the present disclosure, the sealing member 202 has an abutting portion that abuts against the vehicle body 30. After the vehicle body 30 abuts against the abutting portion, the vehicle body 30 may squeeze the abutting portion under the effect of gravity of the vehicle body 30 to reduce the thickness of the abutting portion after being squeezed. The thickness of the abutting portion after the vehicle body 30 abuts against the abutting portion is set to L3, the following relation is satisfied: L3 ≥ 4 mm. In other words, the thickness of the abutting portion after being squeezed is not less than 4 mm. When the vehicle 100 travels on a bumpy road, the vehicle body 30 may further squeeze the abutting portion when swaying. By setting the thickness of the abutting portion after being squeezed to be not less than 4 mm, when the abutting portion is further squeezed, the sealing member 202 may have a buffering effect on the vehicle body 30, so that the vehicle body 30 does not easily collide with the sealing plate 201, and preventing the heat exchange plate 101 from being broken and failing as a result of a collision, which effectively improves operating stability of the battery 10.

In some embodiments of the present disclosure, the sealing member 202 and/or the vehicle body 30 is provided with a hydrophobic coating. The hydrophobic coating may be arranged between the sealing member 202 and the vehicle body 30. The hydrophobic coating has desirable hydrophobic properties. By spraying the hydrophobic coating on an outer surface of the sealing member 202, the hydrophobic coating may prevent a liquid from accumulating at a position where the sealing member 202 abuts against the vehicle body 30, and may further prevent the liquid from seeping into the passenger compartment 40 through the gap between the sealing member 202 and the vehicle body 30. Certainly, in some other embodiments, the hydrophobic coating may also be sprayed on an outer surface of the vehicle body 30 in contact with the sealing member 202, or the hydrophobic coating may be sprayed on both the outer surface of the vehicle body 30 in contact with the sealing member 202 and the outer surface of the sealing member 202. In this way, it may be ensured that the liquid does not easily accumulate at the position where the sealing member 202 abuts against the vehicle body 30, thereby further alleviating the water seepage problem of the passenger compartment 40.

Further, in order to test whether the sealing between the vehicle body 30 and the battery 10 is effective, a tester may compress the abutting portion to a thickness of 4 mm, control a pressure in the passenger compartment 40 at 10 kPa, maintain the passenger compartment 40 of the vehicle 100 at the pressure for 30 s, and allow the passenger compartment to stand for 60 s. In this case, a decrease in an air pressure in the passenger compartment 40 of not greater than 100 Pa proves good sealing between the vehicle body 30 and the battery 10, thereby preventing a serious water seepage problem from occurring in the vehicle 100 after leaving the factory.

In the description of the present disclosure, it should be understood that orientation or position relationships indicated by the terms such as "center", "longitudinal", "transverse", "length", "width", "thickness", "on", "below", "front", "back", "left", "right", "vertical", "horizontal", "top", "bottom", "inside", "outside", "clockwise", "anticlockwise", "axial direction", "radial direction", and "circumferential direction" are based on orientation or position relationships shown in the accompanying drawings, and are used only for ease and brevity of description of the present disclosure, rather than indicating or implying that the mentioned apparatus or element needs to have a particular orientation or be constructed and operated in a particular orientation. Therefore, such terms should not be construed as a limitation on the present disclosure.

In the description of the present disclosure, "multiple" means two or more.

In the descriptions of the present disclosure, the description of reference terms such as "one embodiment", "some embodiments", "an exemplary embodiment", "an example", "a specific example", or "some examples" means that specific features, structures, materials, or characteristics described in combination with the embodiment or examples are included in at least one embodiment or example of the present disclosure. In this specification, exemplary descriptions of the foregoing terms do not necessarily refer to the same embodiment or example. In addition, the described specific features, structures, materials, or characteristics may be combined in a proper manner in any one or more of the embodiments or examples.

Although the embodiments of the present disclosure have been shown and described, a person of ordinary skill in the art may understand that various changes, modifications, replacements, and variations may be made to the embodiments without departing from the principle and spirit of the present disclosure, and the scope of the present disclosure is defined by the claims and their equivalents.

## Claims

1. A vehicle (100), comprising: a vehicle body (30), a battery (10), and a sealing assembly (20),
the sealing assembly (20) being arranged between the vehicle body (30) and the battery (10), the sealing assembly (20) comprising a sealing plate (201) and a sealing member (202), the sealing plate (201) being fixed and hermetically connected to the battery (10), a surface of the sealing plate (201) that is away from the battery (10) has a mounting plane (203), the sealing member (202) being arranged on the mounting plane (203), the sealing member (202) being sandwiched between the vehicle body (30) and the sealing plate (201), wherein the vehicle body (30) and the battery (10) jointly define a passenger compartment (40), or the vehicle body (30) and the sealing assembly (20) jointly define the passenger compartment (40).

2. The vehicle (100) according to claim **1,** wherein the battery (10) comprises a heat exchange plate (101); the heat exchange plate (101) and the vehicle body (30) jointly define the passenger compartment (40); the heat exchange plate (101) defines a heat exchange flow channel (102); the sealing plate (201) is arranged between the sealing member (202) and the heat exchange plate (101); the sealing plate (201) has a first sealing portion (204); the first sealing portion (204) is fixed and hermetically connected to the heat exchange plate (101); and the first sealing portion (204) corresponds to the heat exchange flow channel (102).

3. The vehicle (100) according to claim 2, wherein the heat exchange flow channel (102) protrudes toward the sealing plate (201) to form a first connecting portion; and a surface of the first connecting portion connected to the first sealing portion (204) is constructed as a plane.

4. The vehicle (100) according to claim 3, wherein a width of the first connecting portion is not less than 1 mm.

5. The vehicle (100) according to any of claims 2 to 4, wherein the first sealing portion (204) is formed with the mounting plane (203).

6. The vehicle (100) according to any of claims 2 to 5, wherein a surface of the first sealing portion (204) connected to the heat exchange plate (101) is constructed as a plane or a profiling surface.

7. The vehicle (100) according to any of claims 2 to 6, wherein the sealing plate (201) further has a second sealing portion (205); the heat exchange plate (101) has a second connecting portion; the second connecting portion is arranged at an edge of the heat exchange plate (101) and surrounds an outer side of the heat exchange flow channel (102); the second sealing portion (205) is fixed and hermetically connected to the heat exchange plate (101); and the second sealing portion (205) is arranged corresponding to the second connecting portion.

8. The vehicle (100) according to claim 7, wherein a connecting flange (206) is connected between the first sealing portion (204) and the second sealing portion (205), so that a height of the first sealing portion (204) is greater than a height of the second sealing portion (205).

9. The vehicle (100) according to any of claims 2 to 8, wherein a connection structure is filled between the sealing plate (201) and the heat exchange plate (101); and the connection structure fixes and hermetically connects the sealing plate (201) and the heat exchange plate (101).

10. The vehicle (100) according to any of claims 1 to 9, wherein the sealing plate (201) defines an avoidance hole (207) for avoiding the battery (10); and the avoidance hole (207) corresponds to the passenger compartment (40).

11. The vehicle (100) according to any of claims 1 to 10, wherein the sealing member (202) is constructed in a shape of a ring.

12. The vehicle (100) according to any of claims 1 to 11, wherein a cross-sectional width of the sealing member (202) before compression deformation is L1, and a cross-sectional thickness of the sealing member (202) before compression deformation is L2, which satisfy the following relation: L1 ≥ 2L2.

13. The vehicle (100) according to any of claims 1 to 12, wherein the sealing member (202) has an abutting portion that abuts against the vehicle body (30); and after the vehicle body (30) abuts against the abutting portion, a thickness of the abutting portion is L3, which satisfy the following relation: L3 ≥ 4 mm.

14. The vehicle (100) according to any of claims 1 to 13, wherein the sealing member (202) and/or the vehicle body (30) is provided with a hydrophobic coating; and the hydrophobic coating is arranged between the sealing member (202) and the vehicle body (30).
